# FASCICULE DE BREVET EUROPEEN

(11) **EP 1 014 414 B1**
(45) Date de publication et mention de la délivrance du brevet: **07.06.2006**
(21) Numéro de dépôt: 99410171.5
(22) Date de dépôt: 26.11.1999
(51) Int. Cl.: H01H 71/08

(54) **Appareil électrique tel un disjoncteur ou un interrupteur modulaire**
Elektrisches Gerät wie ein Leistungsschalter oder ein moduläre Schalter
Electrical apparatus like a circuit breaker or a modular switch

(30) Priorité: 23.12.1998 FR 9816579
(43) Date de publication de la demande: 28.06.2000
(73) Titulaire: SCHNEIDER ELECTRIC INDUSTRIES SAS, 92500 Rueil-Malmaison (FR)
(72) Inventeur: Caire, Jean, Schneider Electric Industries SA, 38050 Grenoble Cédex 09 (FR); Chevaleyre, Robert, Schneider Electric Industr. SA, 38050 Grenoble cédex 09 (FR)
(74) Mandataire: Ritzenthaler, Jacques

(56) Documents cités:
- EP-A- 0 704 874
- DE-A- 3 023 499
- DE-U- 7 813 854
- FR-A- 2 125 425
- FR-A- 2 730 855

## Description

L'invention concerne un appareil électrique tel un disjoncteur destiné à être fixé sur un support tel un rail et logé dans un boîtier de forme sensiblement parallèlépipèdique, ledit boîtier comprenant une face arrière de fixation au support et une face avant, lesdites faces étant sensiblement parallèles entre elles, deux faces principales sensiblement parallèles entre elles et perpendiculaires aux faces avant et arrière, par lesquelles ledit boîtier peut être accolé aux boîtiers d'autres appareils du même type, l'ensemble des appareils étant montés de manière alignée sur le support, et au moins une face de raccordement, ladite face de raccordement comprenant au moins une borne d'entrée et au moins une borne de sortie, la au moins une borne d'entrée étant située dans un plan, dit premier, perpendiculaire à la face de raccordement et parallèle à la direction d'alignement des appareils.

Un appareil du genre précédemment mentionné est décrit dans le document FR 2 725 071 de la demanderesse. Ce document décrit un interrupteur différentiel monté sur un rail et destiné à alimenter d'autres appareils de protection électrique tels des coupe-circuits à fusibles ou des disjoncteurs également montés sur le rail. Cet interrupteur différentiel présente sur sa face de raccordement deux bornes d'entrée et deux bornes de sortie, ces bornes étant toutes sensiblement alignées dans un même plan parallèle au plan de fixation et perpendiculaire à la face de raccordement. Cette disposition permet, lorsque la face de raccordement est orientée vers le haut des appareils, d'assurer à la fois l'alimentation de l'interrupteur et le raccordement aux appareils disposés en aval dudit appareil, par le haut des appareils. Cependant, compte tenu de cet alignement des bornes dans un même plan, la largeur de l'appareil parallèlement au rail est augmentée, étant avantageusement de 36mm. Il résulte de cette disposition, que le calibre des appareils est limité à 40A, car augmenter le calibre reviendrait à augmenter la largeur de l'appareil. Cette limitation du calibre de l'appareil représente un inconvénient.

On connaît également un appareil décrit dans le document FR 2 730 855 comportant une borne d'entrée de phase et une borne d'entrée de neutre décalées suivant le sens de la profondeur des appareils.

La présente invention résout ce problème et propose un appareil électrique tel un interrupteur ou un disjoncteur modulaire, pour lequel l'alimentation et le raccordement aval des appareils peut s'effectuer par le haut, et qui peut recevoir des calibres plus importants sans que son encombrement sur le rail soit augmenté.

A cet effet, la présente invention a pour objet un appareil du genre précédemment mentionné, cet appareil étant caractérisé en ce que la ou chaque borne de sortie est située dans un plan, dit second, sensiblement parallèle au premier mais décalé par rapport à celui-ci suivant la profondeur des appareils.

Selon une réalisation particulière de l'invention, l'une au moins des bornes d'entrée ou des bornes de sortie comporte une pince d'embrochage. Avantageusement, toutes les bornes sont équipées d'une pince d'embrochage, les bornes d'entrée coopérant avec un connecteur destiné à recevoir un câble, alors que les bornes de sortie sont destinées à recevoir les dents d'un peigne.

D'autres avantages et caractéristiques ressortiront plus clairement de la description suivante de modes particuliers de réalisation, donnés à titre d'exemples non limitatifs, et représentés aux dessins annexés sur lesquels :
La figure 1 est une vue de face illustrant schématiquement un appareil de protection électrique tel un interrupteur différentiel, du type unipolaire et neutre, conforme à l'invention,
La figure 1a est une vue schématique de dessus dudit appareil,
La figure 2 est une vue similaire à la figure 1, mais illustrant un appareil de protection électrique du type tripolaire et neutre selon l'invention,
La figure 3 est une vue similaire à la précédente, illustrant une autre réalisation d'un appareil tripolaire et neutre conforme à l'invention,
La figure 3a est une vue de dessus de la figure précedente, et
Les figures 4 et 5 sont respectivement deux vues en coupe d'un appareil selon l'invention, suivant un plan perpendiculaire à la direction du rail, et illustrant respectivement deux modes de réalisation différents de l'appareil et de ses bornes d'entrée et de sortie.

Sur les figures, on voit un interrupteur différentiel I du genre généralement utilisé pour assurer la protection d'un ou plusieurs circuits électriques contre les courants de défauts à la terre. Cet interrupteur I est destiné à être monté sur un support en l'occurence un rail de montage 1, et à être relié électriquement en série à un ou plusieurs éléments de protection électriques (non représentés) également montés sur le rail 1, tels des coupe-circuits à fusibles ou des disjoncteurs.
Cet interrupteur différentiel I, ainsi que les autres appareils sont du type modulaire, chaque module (a,b,c,d) renfermant une unité de coupure d'une phase ou du neutre et logeant une borne d'entrée et une borne de sortie. Ces appareils sont logés chacun dans un boîtier B de forme sensiblement parallèlépipèdique, ledit boîtier B comprenant deux faces parallèles principales 2,3 par lesquelles les boîtiers B de deux appareils peuvent être accolés, une face arrière 4 de fixation au rail de montage 1, une face avant 5, lesdites faces avant 5 et arrière 4 étant perpendiculaires aux faces principales 2,3, et deux faces de raccordement 6,7 parallèles entre elles et perpendiculaires aux faces principales 2,3 et aux faces avant 5 et arrière 4 précitées.

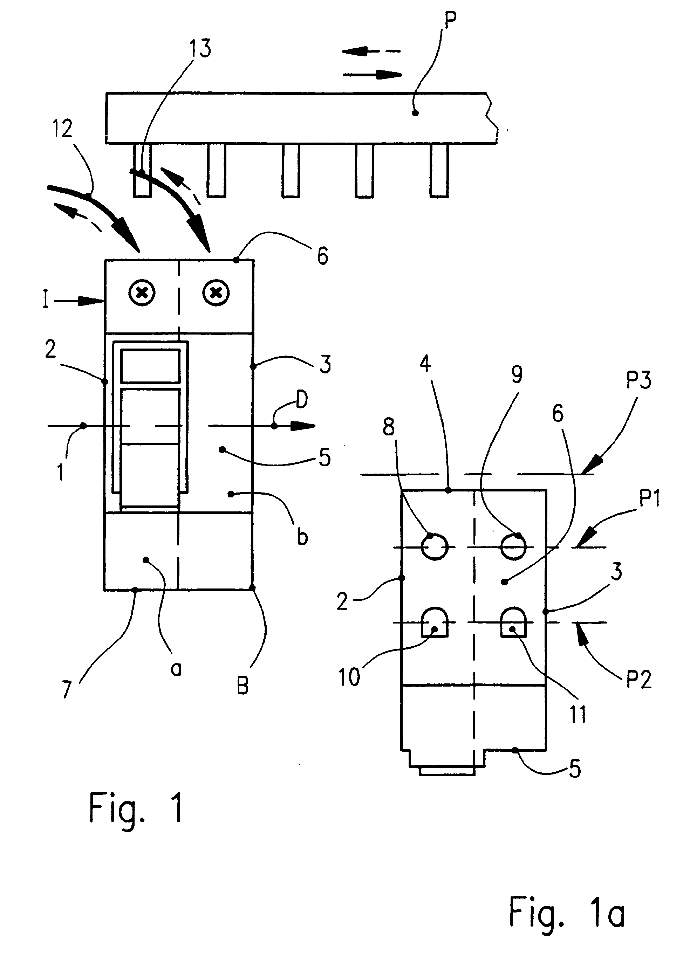

Sur la figure 1, l'appareil est du type unipolaire et neutre et est constitué par deux modules a,b logeant respectivement une unité de coupure de neutre et une unité de coupure de phase. Seule l'une 6 des faces de raccordement 6,7 de cet appareil comporte des bornes de raccordement 8 à 11. Selon l'invention, et comme ceci est particulièrement visible sur la figure la, cette face de raccordement 6 comporte deux bornes d'entrée 8,9 respectivement de neutre et de phase, situées dans un premier plan P1 perpendiculaire à la face de raccordement 6 et parallèle au rail 1 et deux bornes de sortie 10,11 respectivement de neutre et de phase et situées dans un second plan P2 parallèle au premier P1, mais décalé par rapport à ce premier plan P1 suivant la profondeur du boîtier B. Cette profondeur est définie perpendiculairement au plan de fixation P3 de l'appareil sur le rail 1 (ou plan du support 1) et parallèlement à la face de raccordement 6. Le premier plan précité P1 est situé entre le support 1 et le second plan précité P2. Les deux bornes d'entrée 8,9 sont destinées à recevoir respectivement deux câbles d'alimentation 12,13 tandis que les deux bornes de sortie 10,11 sont destinées à recevoir deux dents 14,15 consécutives d'un peigne de raccordement classique P du type unipolaire et neutre. Le calibre de cet appareil est de 63A.

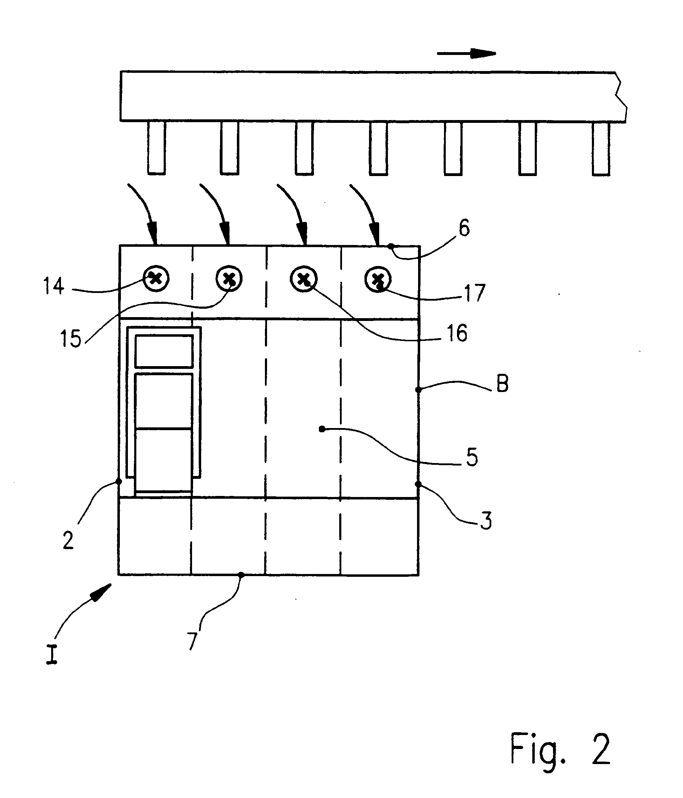

Sur la figure 2, l'appareil est du type tripolaire et neutre et comporte de la même façon que pour l'appareil de la figure précédente, sur sa face de raccordement 6, un ensemble de quatre bornes d'entrée (non représentées) alignées dans un premier plan perpendiculaire à la face de raccordement et parallèle à la direction D d'alignement des appareils, c'est à dire au rail. Et il comporte également un ensemble de quatre bornes de sortie 14,17 alignées dans un second plan (non représenté) parallèle au premier plan P1, ledit second plan étant décalé par rapport au premier P1 suivant la profondeur du boîtier.

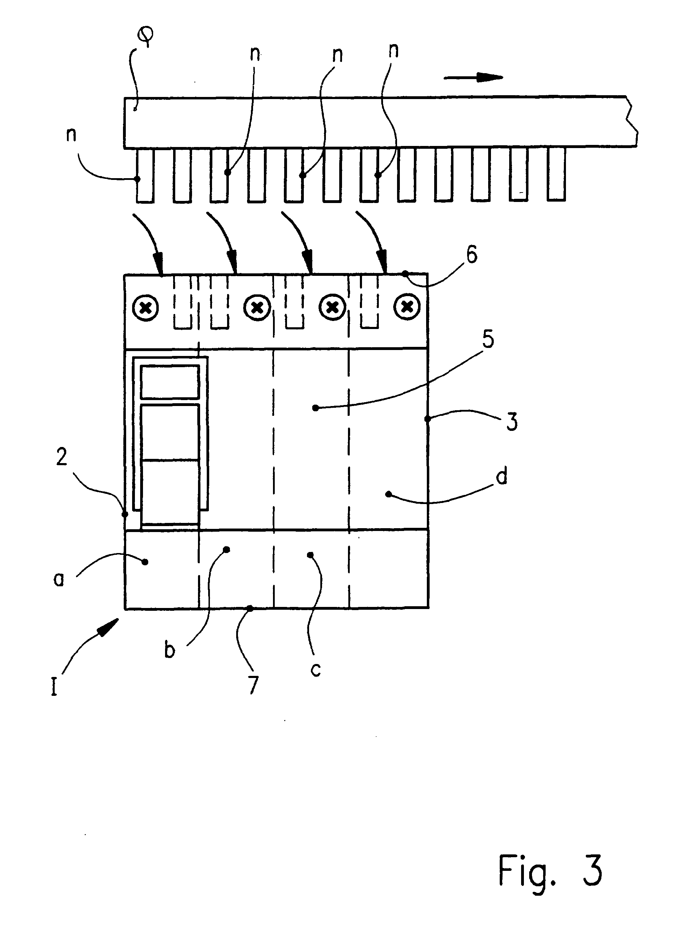

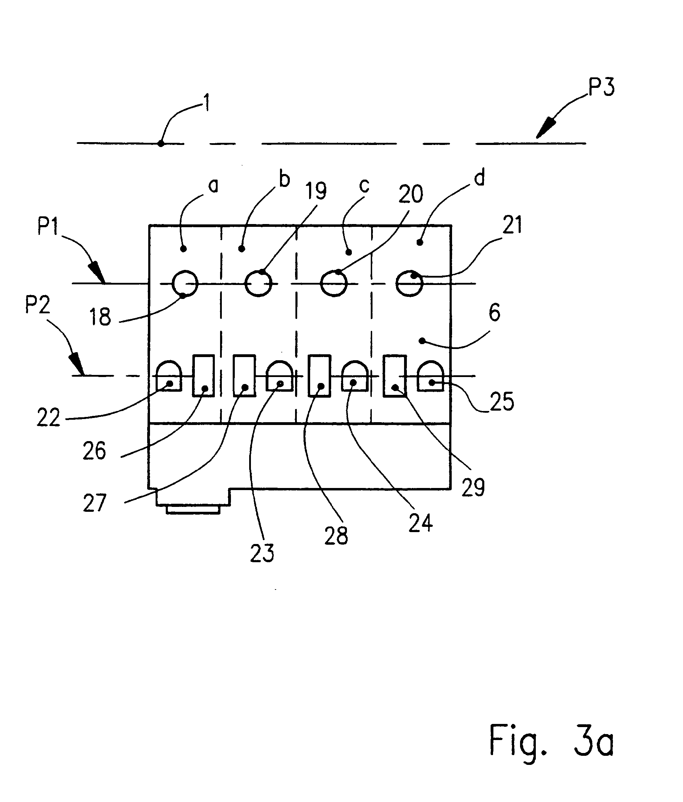

Sur les figures 3 et 3a, l'appareil est également du type tripolaire et neutre et comporte quatre modules a,b,c,d d'une largeur de 18mm. Sur sa face de raccordement 6 sont placées dans un premier plan P1 quatre borne d'entrée 18 à 21 destinées à recevoir chacune un cable d'alimentation et dans un second plan P2, décalé en profondeur par rapport au premier P1, pour chaque module, une borne 22 à 25 et un évidement 26 à 29, ledit évidement étant destiné à recevoir une dent non utilisée d'un peigne Q dont le pas est de 9 mm, ledit peigne Q distribuant successivement les différentes phases avec interposition d'une dent de neutre n entre deux dents de phase successives.

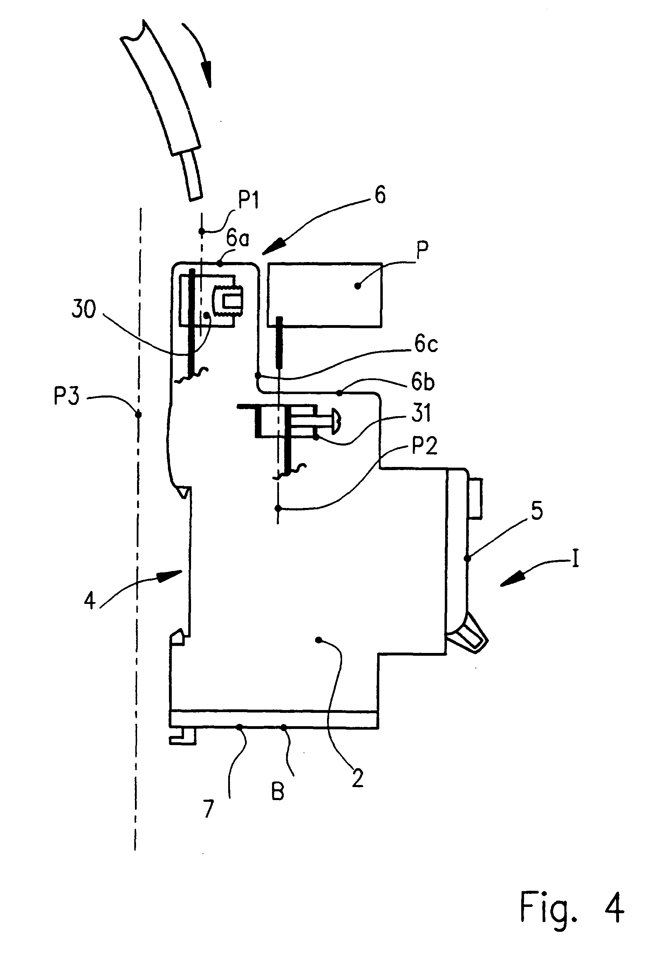

Sur la figure 4, on voit un appareil du même type que celui décrit dans les figures précédentes. Selon cette réalisation, la face de raccordement 6 de l'appareil I est constituée de deux portions de surfaces 6a,6b décalées suivant la hauteur de l'appareil. Cette hauteur est définie parallèlement au plan de fixation P3 et aux faces avant 5 et arrière 4, et perpendiculairement aux faces de raccordement 6,7. La portion de surface de raccordement 6a située au niveau supérieur, loge les bornes d'entrée 30 de l'appareil, tandis que la portion de surface 6b située au niveau inférieur loge les bornes de sortie 31 destinées à coopérer avec un peigne P. On notera que dans cette réalisation, les bornes sont du type à cage à vis. L'un des avantages de cette réalisation tient en ce que le décalage des deux portions de surface 6a,6b engendre la présence d'une portion de paroi 6c formant écran entre les bornes d'entrée 30 et les bornes de sortie 31 et destinée à empêcher l'opérateur de raccorder intempestivement une borne d'entrée 30 et une borne de sortie 31 au moyen dudit peigne P.

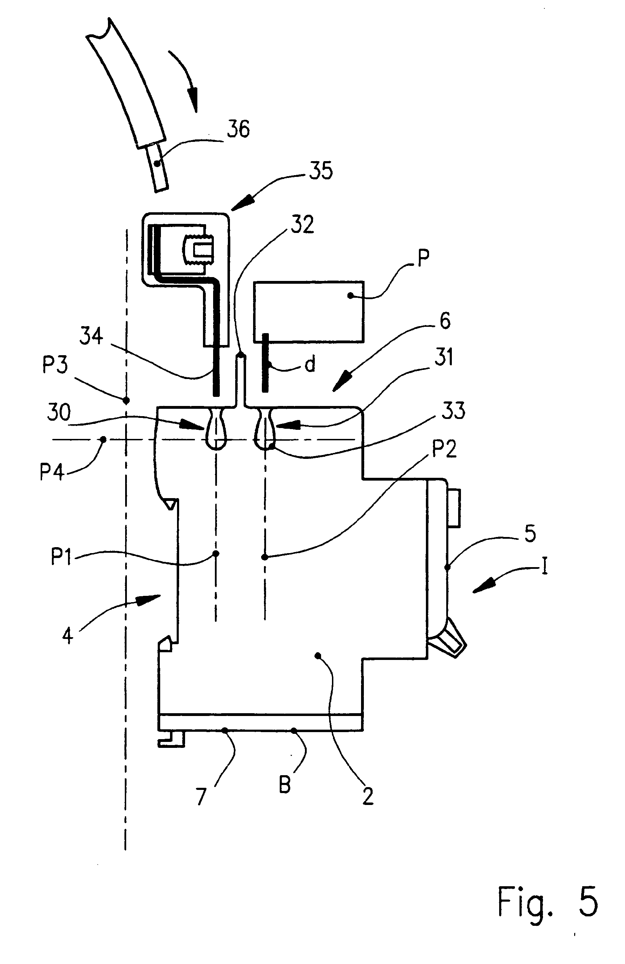

Selon la réalisation illustrée sur la figure 5, les bornes d'entrée 30 et de sortie 31 sont situées sur un même plan horizontal P4, c'est à dire parallèle à la face de raccordement 6. Il a donc été prévu, entre les deux ensembles de bornes 30,31 une paroi de séparation 32 s'étendant parallèlement à la direction d'alignement des appareils, c'est à dire parallèlement à la direction du rail et aux faces avant 5 et arrière 4 et dont la hauteur est telle que ladite paroi dissuade l'opérateur de raccorder électriquement une borne d'entrée 30 à une borne de sortie 31 par l'intermédiaire d'un peigne ou analogue. Selon cette réalisation, les bornes de sortie 31 et les bornes d'entrée 30 logent chacun une pince d'embrochage 33. Les pinces d'embrochage 33 des bornes de sortie 31 sont destinées à recevoir respectivement les dents d d'un peigne P, alors que les pinces 33 logées dans les bornes d'entrée 30 sont destinées à recevoir chacune une plage de contact 34 appartenant à un connecteur d'alimentation 35, ledit connecteur 35 étant lui-même destiné à recevoir un câble d'alimentation 36.

On a donc réalisé grâce à l'invention un appareil électrique pour lequel l'alimentation et le raccordement aux appareils situés en aval, s'effectuent du même côté et donc avantageusement par le haut des appareils, ledit appareil pouvant supporter des calibres importants dans un encombrement sur le rail (36mm) correspondant à celui des appareils de l'art antérieur.
Bien entendu, l'invention n'est pas limitée aux modes de réalisation décrits et illustrés qui n'ont été donnés qu'à titre d'exemple.
Ainsi, dans les réalisations décrites, toutes les bornes d'entrée sont alignées dans un même plan, de même que les bornes de sortie. Or, l'invention s'applique aussi au cas ou les bornes d'entrée de phase sont alignées dans un plan et les bornes d' entrée de neutre sont alignées dans un autre plan parallèle au premier. Ce qui est valable aussi pour les bornes de sortie.

De même par exemple, le support pourra être constitué par autre chose qu'un rail, c'est à dire tout plan de support sur lequel pourront être fixés individuellement les appareils..
De façon générale, l'invention s'applique à tout appareil électrique présentant sur une même face des bornes d'entrée et des bornes de sortie, et destiné à alimenter d'autres appareils avec lesquels il est aligné sur un même support.

## Revendications

1. Appareil électrique tel un disjoncteur destiné à être fixé sur un support tel un rail, comprenant un boîtier de forme sensiblement parallèlépipèdique, ledit boîtier comprenant une face arrière (4) de fixation au support et une face avant (5), sensiblement parallèles entre elles, deux faces principales (2, 3) sensiblement parallèles entre elles et perpendiculaires aux faces avant et arrière, par lesquelles ledit boîtier peut être accolé aux boîtiers d'autres appareils du même type, afin que l'ensemble des appareils soient montés de manière alignée sur le support, et au moins une face de raccordement (6,7), ladite face de raccordement comprenant au moins une borne d'entrée et au moins une borne de sortie, la ou chaque borne d'entrée étant située dans un plan, dit premier (P1), perpendiculaire à la face de raccordement et parallèle à la direction d'alignement des appareils,
**caractérisé en ce que** la ou chaque borne de sortie (10,11 et 22 à 25) est située dans un second plan (P2), sensiblement paralléle au premier (P1), mais décalé par rapport à celui-ci suivant la profondeur du boîtier de l'appareil, la ou chaque borne d'entrée (8,9 et 18 à 21) étant située respectivement en regard de la ou de chaque borne de sortie (10,11, 22 à 25) correspondante parallèlement au plan de la face de raccordement (6) et perpendiculairement ou quasi-perpendiculairement à la direction (D) d'alignement des appareils.

2. Appareil selon la revendication 1, **caractérisé en ce que** l'appareil est du type modulaire, chaque module (a,b,c,d) comprenant une unité de coupure d'une phase ou du neutre et renfermant une borne d'entrée (8,9, 18 à 21) et une borne de sortie (10,11, 22 à 25)..

3. Appareil selon la revendication 1 ou 2, **caractérisé en ce que** sa largeur (a,b,c,d) est de 18 mm.

4. Appareil selon l'une quelconque des revendications 1 à 3, **caractérisé en ce que** le premier plan précité (P1) est situé entre le plan (P3) du support (1) et le second plan précité (P2).

5. Appareil selon l'une quelconque des revendications 1 à 4, **caractérisé en ce que** la face de raccordement précitée (6) comporte une paroi de séparation (32) interposée entre l'ensemble des bornes d'entrée (8,9,18 à 21) et l'ensemble des bornes de sortie (10,11, 22 à 25) et destinée à dissuader l'opérateur de raccorder une borne d'entrée avec une borne de sortie.

6. Appareil selon l'une quelconque des revendications 1 à 5, **caractérisé en ce que** la face de raccordement (6) comprend deux portions de surface (6a,6b) décalées suivant la hauteur de l'appareil et logeant respectivement la ou les bornes d'entrée (8,9, 18 à 21) et la ou les bornes de sortie (10,11,22 à 25).

7. Appareil selon l'une quelconque des revendications précédentes, **caractérisé en ce que** l'une au moins des bornes comporte une pince d'embrochage (33).

8. Appareil selon la revendication 7, **caractérisé en ce que** ladite pince (33) est destinée à coopérer avec la plage de contact (34) d'un connecteur (35) destiné à recevoir un câble (36).

9. Appareil selon la revendication 7 ou 8, **caractérisé en ce que** toutes les bornes (30,31) sont équipées d'une pince d'embrochage (33), les bornes d'entrée (30) coopérant avec un connecteur (35) alors que les bornes de sortie (31) sont destinées à recevoir les dents (d) d'un peigne (P).

10. Appareil selon l'une quelconque des revendications précédentes, **caractérisé en ce que** l'appareil est du type unipolaire et neutre, comporte deux modules, et comprend sur sa face de raccordement (6) deux bornes d'entrée (8,9) et deux bornes de sortie (10,11).

11. Appareil selon la revendication 10, **caractérisé en ce que** le calibre de l'appareil est de 63A.

12. Appareil selon l'une quelconque des revendications 1 à 9, **caractérisé en ce que** l'appareil est du type tripolaire et neutre et comporte quatre modules (a,b,c,d) logeant chacun, sur la face de raccordement (6) de l'appareil, une borne d'entrée (18 à 21) et une borne de sortie (22 à 25).

13. Appareil selon l'une quelconque des revendications 1 à 9, **caractérisé en ce que** l'appareil est du type tripolaire et neutre et comprend sur sa face de raccordement (6), pour chaque module (a,b,c,d), une borne d'entrée de phase ou de neutre et une borne de sortie (22 à 25) et un logement (26 à 29) destiné à recevoir une dent (d) non utilisée d'un peigne (P).

14. Appareil selon l'une quelconque des revendications précédentes, **caractérisé en ce que** c'est un interrupteur différentiel (I).

## Claims

1. Electrical apparatus such as a circuit breaker designed to be fixed on a support such as a rail comprising a case of appreciably parallelepipedic shape, said case comprising a rear panel (4) for fixing to the support and a front panel (5), appreciably parallel to one another, two main panels (2, 3) appreciably parallel to one another and perpendicular to the front and rear panels, via which said case can be adjoined to the cases of other apparatuses of the same type, so that all of the apparatuses are mounted in aligned manner on the support, and at least one connection panel (6, 7), said connection panel comprising at least one input terminal and at least one output terminal, the or each input terminal being situated in a plane, called the first plane (P1), perpendicular to the connection panel and parallel to the direction of alignment of the apparatuses,
**characterized in that** the or each output terminal (10, 11 and 22 to 25) is situated in a second plane (P2), appreciably parallel to the first plane (P1) but offset with respect to the latter in the depthwise direction of the case of the apparatus, the or each input terminal (8, 9 and 18 to 21) being situated respectively facing the or each corresponding output terminal (10, 11 and 22 to 25) parallel to the plane of the connection panel (6) and perpendicularly or almost perpendicularly to the direction (D) of alignment of the apparatuses.

2. Apparatus according to claim 1, **characterized in that** the apparatus is of the modular type, each module (a,b,c,d) comprising a breaking unit of a phase or of the neutral and housing an input terminal (8, 9, 18 to 21) and an output terminal (10, 11, 22 to 25).

3. Apparatus according to claim 1 or 2, **characterized in that** its width (a,b,c,d) is 18 mm.

4. Apparatus according to any one of the claims 1 to 3, **characterized in that** the above-mentioned first plane (P1) is situated between the plane (P3) of the support (1) and the above-mentioned second plane (P2).

5. Apparatus according to any one of the claims 1 to 4, **characterized in that** the above-mentioned connection panel (6) comprises a separating wall (32) interposed between the set of input terminals (8, 9, 18 to 21) and the set of output terminals (10, 11, 22 to 25) and designed to dissuade the operator from connecting an input terminal with an output terminal.

6. Apparatus according to any one of the claims 1 to 5, **characterized in that** the connection panel (6) comprises two surface portions (6a, 6b) offset in the heightwise direction of the apparatus and respectively housing the input terminal (8, 9, 18 to 21) and the output terminal (10, 11, 22 to 25).

7. Apparatus according to any one of the foregoing claims, **characterized in that** at least one of the terminals comprises a draw-in tulip finger contact (33).

8. Apparatus according to claim 7, **characterized in that** said tulip finger contact (33) is designed to operate in conjunction with the contact strip (34) of a connector (35) designed to receive a cable (36).

9. Apparatus according to claim 7 or 8, **characterized in that** all the terminals (30, 31) are equipped with a draw-in tulip finger contact (33), the input terminals (30) operating in conjunction with a connector (35) whereas the output terminals (31) are designed to receive the teeth (d) of a connection comb (P).

10. Apparatus according to any one of the foregoing claims, **characterized in that** the apparatus is of the single-pole and neutral type, comprises two modules, and comprises on its connection panel (6) two input terminals (8, 9) and two output terminals (10, 11).

11. Apparatus according to claim 10, **characterized in that** the rating of the apparatus is 63A.

12. Apparatus according to any one of the claims 1 to 9, **characterized in that** the apparatus is of the three-pole and neutral type and comprises four modules (a,b,c,d) each housing, on the connection panel (6) of the apparatus, an input terminal (18 to 21) and an output terminal (22 to 25).

13. Apparatus according to any one of the claims 1 to 9, **characterized in that** the apparatus is of the three-pole and neutral type and comprises on its connection panel (6), for each module (a,b,c,d), a phase or neutral input terminal and an output terminal (22 to 25) and a housing (26 to 29) designed to receive an unused tooth (d) of a connection comb (P).

14. Apparatus according to any one of the foregoing claims, **characterized in that** the apparatus is a differential switch (I).

## Patentansprüche

1. Elektrisches Schaltgerät wie z.B. ein Leistungsschalter, das dazu dient, auf einem Träger wie z.B. einer Tragschiene befestigt zu werden, und das in einem annähernd kastenförmigen Gehäuse angeordnet ist, welches Gehäuse eine zur Befestigung auf dem Träger dienende Rückseite (4), eine annähernd parallel zu dieser angeordnete Vorderseite (5), zwei annähernd parallel zueinander sowie senkrecht zur Vorderseite und zur Rückseite angeordnete Hauptseiten (2, 3), mit denen das genannte Gehäuse an die Gehäuse weiterer Schaltgeräte des gleichen Typs angebaut werden kann, derart dass alle Schaltgeräte fluchtend auf dem Träger montiert sind, sowie mindestens eine Anschlussseite umfasst, welche Anschlussseite (6, 7) mindestens eine Eingangsklemme und mindestens eine Ausgangsklemme umfasst, wobei die bzw. jede Eingangsklemme in einer als erste Ebene (P1) bezeichneten Ebene angeordnet ist, die senkrecht zur Anschlussseite und parallel zur Fluchtungsebene der Schaltgeräte verläuft,
**dadurch gekennzeichnet, dass** die bzw. jede Ausgangsklemme (10, 11 und 22 bis 25) in einer zweiten Ebene (P2) angeordnet ist, welche annähernd parallel zur ersten Ebene (P1) verläuft, jedoch in der Tiefe des Schaltgerätegehäuses versetzt zu dieser angeordnet ist, wobei die bzw. jede Eingangsklemme (8, 9 und 18 bis 21) in einer parallel zur Ebene der Anschlussseite (6) sowie senkrecht oder annähernd senkrecht zur Fluchtungsebene (D) der Schaltgeräte verlaufenden Ebene der bzw. jeder zugeordneten Ausgangsklemme (10, 11, 22 bis 25) gegenüberliegt.

2. Schaltgerät nach Anspruch 1, **dadurch gekennzeichnet dass** das Schaltgerät modular ausgeführt ist, wobei jedes Modul (a, b, c, d) ein Kontaktsystem zur Abschaltung eines Phasenleiters bzw. des Neutralleiters umfasst und eine Eingangsklemme (8, 9, 18 bis 21) sowie eine Ausgangsklemme (10, 11, 22 bis 25) enthält.

3. Schaltgerät nach Anspruch 1 oder 2, **dadurch gekennzeichnet dass** seine Breite (a, b, c, d) 18 mm beträgt.

4. Schaltgerät nach irgendeinem der Ansprüche 1 bis 3, **dadurch gekennzeichnet, dass** die genannte erste Ebene (P1) zwischen der Ebene (P3) des Trägers (1) und der genannten zweiten Ebene (P2) liegt.

5. Schaltgerät nach irgendeinem der Ansprüche 1 bis 4, **dadurch gekennzeichnet, dass** die genannte Anschlussseite (6) eine Trennwand (32) umfasst, die zwischen den Eingangsklemmen (8, 9, 18 bis 21) und den Ausgangsklemmen (10, 11, 22 bis 25) angeordnet ist und dazu dient zu verhindern, dass der Bediener eine Eingangsklemme mit einer Ausgangsklemme verbindet.

6. Schaltgerät nach irgendeinem der Ansprüche 1 bis 5, **dadurch gekennzeichnet, dass** die Anschlussseite (6) zwei Flächenabschnitte (6a, 6b) umfasst, die in der Höhe des Schaltgeräts versetzt zueinander angeordnet sind und in die die Eingangsklemme(n) (8, 9, 18 bis 21) bzw. die Ausgangsklemme(n) (10, 11, 22 bis 25) eingesetzt sind.

7. Schaltgerät nach irgendeinem der vorhergehenden Ansprüche, **dadurch gekennzeichnet, dass** mindestens eine der Klemmen eine Kontaktzange (33) umfasst.

8. Schaltgerät nach Anspruch 7, **dadurch gekennzeichnet, dass** die genannte Kontaktzange (33) dazu dient, mit dem Anschlussstift (34) eines Steckverbinders (35) zusammenzuwirken, der seinerseits zur Aufnahme eines Kabels (36) dient.

9. Schaltgerät nach Anspruch 7 oder 8, **dadurch gekennzeichnet, dass** alle Klemmen (30, 31) mit einer Kontaktzange (33) ausgestattet sind, wobei die Eingangsklemmen (30) mit einem Steckverbinder (35) zusammenwirken, während die Ausgangsklemmen (31) zur Aufnahme der Zähne (d) einer Kammschiene (P) dienen.

10. Schaltgerät nach irgendeinem der vorhergehenden Ansprüche, **dadurch gekennzeichnet, dass** das Schaltgerät als einpoliges Gerät mit Neutralleiter ausgebildet ist, zwei Module umfasst und an seiner Anschlussseite (6) zwei Eingangsklemmen (8, 9) sowie zwei Ausgangsklemmen (10, 11) aufweist.

11. Schaltgerät nach Anspruch 10, **dadurch gekennzeichnet, dass** der Nennstrom des Schaltgeräts 63 A beträgt.

12. Schaltgerät nach irgendeinem der Ansprüche 1 bis 9, **dadurch gekennzeichnet, dass** das Schaltgerät als dreipoliges Gerät mit Neutralleiter ausgebildet ist und vier Module (a, b, c, d) umfasst, in die an der Anschlussseite (6) des Schaltgeräts jeweils eine Eingangsklemme (18 bis 21) und eine Ausgangsklemme (22 bis 25) eingesetzt sind.

13. Schaltgerät nach irgendeinem der Ansprüche 1 bis 9, **dadurch gekennzeichnet, dass** das Schaltgerät als dreipoliges Gerät mit Neutralleiter ausgebildet ist und an seiner Anschlussseite (6) in jedem Modul (a, b, c, d) eine Phasenleiter- bzw. Neutralleiter-Eingangsklemme sowie eine Ausgangsklemme (22 bis 25) und eine Ausnehmung (26 bis 29) zur Aufnahme eines ungenutzten Zahns (d) einer Kammschiene (P) aufweist.

14. Schaltgerät nach irgendeinem der vorhergehenden Ansprüche, **dadurch gekennzeichnet, dass** es als Differenzstrom-Schutzschalter (1) ausgebildet ist.
